# EUROPÄISCHE PATENTSCHRIFT

(11) **EP 4 251 937 B1**
(45) Veröffentlichungstag und Bekanntmachung des Hinweises auf die Patenterteilung: **28.01.2026**
(21) Anmeldenummer: 21815120.7
(22) Anmeldetag: 11.11.2021
(51) Int. Cl.: F25D 23/02, B29C 33/26, B29C 44/12, B29C 44/14

(54) **FERTIGUNGSANLAGE ZUM FERTIGEN EINER TÜR EINES HAUSHALTSKÄLTEGERÄTS, UND VERFAHREN ZUM HERSTELLEN DER TÜR**
MANUFACTURING INSTALLATION FOR MANUFACTURING A DOOR OF A HOUSEHOLD REFRIGERATOR, AND A PROCESS FOR PRODUCING THE DOOR
INSTALLATION DE FABRICATION POUR FABRIQUER UNE PORTE D'UN RÉFRIGÉRATEUR ÉLECTROMÉNAGER, ET PROCÉDÉ POUR PRODUIRE LA PORTE

(30) Priorität: 25.11.2020 DE 102020214756; 28.10.2021 DE 102021212180
(43) Veröffentlichungstag der Anmeldung: 04.10.2023
(73) Patentinhaber: BSH Hausgeräte GmbH, 81739 München (DE)
(72) Erfinder: FÄRBER, Jürgen, 89537 Giengen (DE); SICK, Markus, 89129 Langenau (DE); LANZINGER, Jürgen, 89231 Neu Ulm (DE)
(86) Internationale Anmeldenummer: PCT/EP2021/081346
(87) Internationale Veröffentlichungsnummer: WO 2022/112011

(56) Entgegenhaltungen:
- EP-A1- 0 281 724
- EP-A1- 3 112 115
- WO-A1-2015/032908
- CN-A- 110 450 330
- DE-B- 1 147 029
- DE-T2- 60 311 292
- JP-A- H06 278 224
- KR-B1- 101 379 946
- KR-B1- 101 379 946
- US-A- 3 139 369
- US-A- 3 510 381
- US-A- 4 150 850
- US-A1- 2011 081 516

## Beschreibung

Ein Aspekt der Erfindung betrifft eine Fertigungsanlage zum Fertigen einer Tür eines Haushaltskältegeräts. Die Fertigungsanlage weist zumindest eine Fertigungsform auf. Die Fertigungsform weist einen ersten Formträger auf, der bestimmungsgemäß zum Aufnehmen einer Vorderseite der Tür ausgebildet ist. Die Fertigungsform weist darüber hinaus eine zum ersten Formträger separaten zweiten Formträger auf, der bestimmungsgemäß zum Aufnehmen einer Rückseite der Tür ausgebildet ist. Die Fertigungsform weist darüber hinaus eine Gelenkvorrichtung auf, mit welcher die beiden Formträger schwenkbar miteinander verbunden sind. Dadurch kann die Fertigungsform geöffnet und geschlossen werden. Im geöffneten Zustand sind der erste Formträger und der zweite Formträger zugänglich, um einerseits die Vorderseite der Tür und andererseits die Rückseite der Tür darin einbringen zu können. Die Vorderseite und die Rückseite sind dabei bereits gefertigte Komponenten der Tür. Sie werden in die Formträger jeweils entsprechend eingelegt.

Derartige Fertigungsanlagen zum Fertigen von derartig aufgebauten Türen eines Haushaltskältegeräts, bei welchem dann ein derartiges thermisch isolierendes Material eingebracht wird, sind in verschiedenen Ausführungsbeispielen bekannt. Beispielsweise sind in dem Zusammenhang sogenannte Trommelanlagen als Fertigungslagen bekannt. Eine Trommelanlage weist, wie der Name bereits zum Ausdruck bringt, eine Trommel auf, an welcher mehrere derartige separate Fertigungsformen angeordnet sind. Die Trommel kann sich um eine horizontal orientierte Achse drehen, sodass diesbezüglich auch die Fertigungsformen entsprechend rotiert werden.

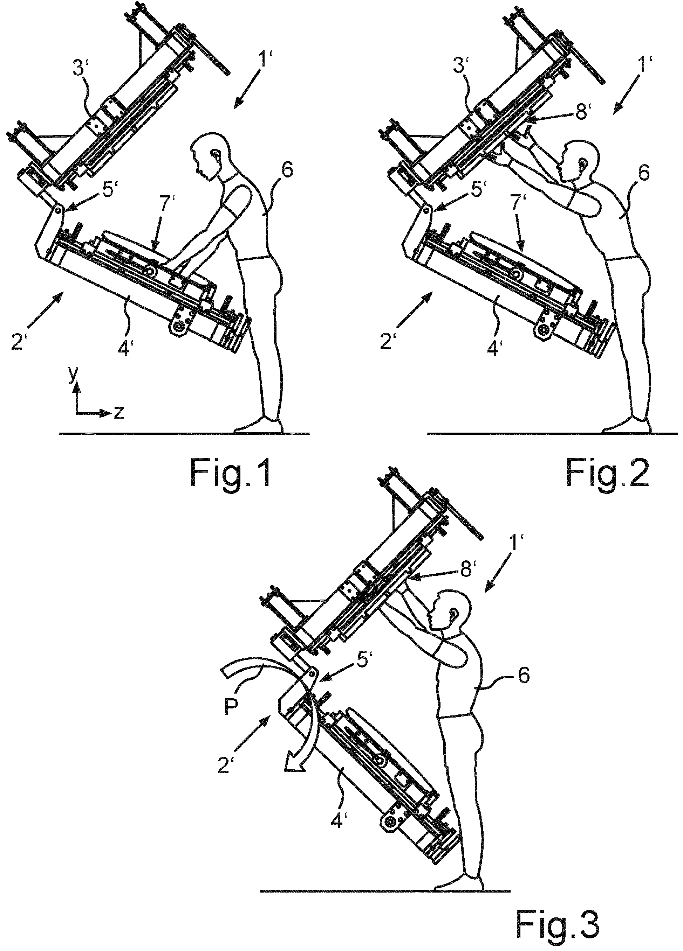

In Fig. 1 ist in dem Zusammenhang eine aus dem Stand der Technik bekannte Fertigungsform 2' für eine Trommelanlage als Fertigungsanlage 1' gezeigt. Diese Fertigungsform weist einen ersten Formträger 3 auf. Sie weist einen dazu separaten zweiten Formträger 4' auf. Des Weiteren ist eine Gelenkvorrichtung 5' gezeigt. In Höhenrichtung y-Richtung der Fertigungsanlage 1' und somit auch der Fertigungsform 2' sind diese beiden Formträger 3' und 4' übereinander angeordnet. Dabei ist in Fig. 1 die Bestückungsposition gezeigt, wenn die Trommel der Fertigungsanlage 1' so rotiert ist, dass ein Werker 6 im stehenden Zustand Zugang zu diesem unteren zweiten Formträger 4' hat. Die Fertigungsform 2' bleibt in dieser Bestückungsposition angeordnet. Wie zu erkennen ist, kann dann der Werker 6 relativ einfach die Bestückung des ihm zugewandten und schräg geneigten unteren zweiten Formträgers 4' mit einer Rückseite 7' für die Tür bestücken. Diese Rückseite 7' der Tür ist insbesondere aus Kunststoff ausgebildet.

Wie darüber hinaus in Fig. 2 zu erkennen ist, ist bei dieser Anordnung der Fertigungsform 2' die Bestückung des darüber angeordneten ersten Formträgers 3' ergonomisch für den Werker 6 nur sehr schwierig und aufwendig möglich. Einerseits ist die Zugänglichkeit nach oben hin eingeschränkt, da der darunter befindliche zweite Formträger 4' entsprechend nach vorne steht. In dem Zusammenhang ist es daher auch schwierig eine entsprechende Bestückung des hier oberen ersten Formträgers 3' mit einer Vorderseite 8 der Tür vorzunehmen. Daher kann es bei diesem Ausführungsbeispiel auch vorkommen, dass die Bestückung mit der Vorderseite 8 nicht ausreichend positionsgenau erfolgt. Dies kann Nachteile beim Schließen der Fertigungsform 2' haben. Insbesondere können dann gegebenenfalls auch die Vorderseite 8' und die Rückseite 7' nicht so zueinander positioniert sein, dass auch die Einbringung des thermischen Isolationsmaterials zielführend und richtig erfolgt und im dann geschlossen Zustand der Fertigungsform 2' kein unerwünschter Austritt des Schaums erfolgt.

In Fig. 3 ist dem Zusammenhang ein weiteres Ausführungsbeispiel einer derartigen Fertigungsanlage 1' aus dem Stand der Technik gezeigt. Um die zu Fig. 2 erläuterten Nachteile reduzieren zu können, ist bei einem Ausführungsbeispiel einer diesbezüglichen Fertigungsanlage 1' in Form einer Trommelanlage vorgesehen, dass dieser untere, zweite Formträger 4' gemäß dem Pfeil P nach unten schwenkbar ist. Der obere Formträger 3' bleibt dabei in seiner ursprünglichen Position angeordnet. Durch diese Verschwenkung ist ein verbesserter Zugang zu dem oberen, ersten Formträger 3' ermöglicht. Allerdings ist dann auch weiterhin eine Überkopftätigkeit des Werkers 6 erforderlich, um diesen ersten, oberen Formträger 3' mit der Vorderseite 8' bestücken zu können. Darüber hinaus ist ein entsprechender Zeitaufwand erforderlich, um diesen zweiten, unteren Formträger 4' nach unten zu verschwenken.

Daher weist die Fertigungsanlage 1' nicht nur die Probleme bezüglich der Position der Formträger 3' und 4' zueinander auf, sondern es ist auch eine Taktzeitverlängerung beim Herstellen der Tür einhergehend, da in der Zeitphase, in welcher dieser untere Formträger 4' nach unten verschwenkt wird, keine Tätigkeit erfolgen kann. Daher ist dies ein entsprechender Zeitverlust.

In Anbetracht der erläuterten Nachteile einer derartigen Fertigungsanlage 1' ist es Aufgabe der vorliegenden Erfindung, eine Fertigungsanlage zu schaffen, bei welcher die Fertigungszeit einer Tür gerade in der Fertigungsphase, in welcher die Fertigungsform bestückt werden soll, reduziert werden kann.

Diese Aufgabe wird durch eine Fertigungsanlage und ein Verfahren gemäß den unabhängigen Ansprüchen gelöst.

US 3 139 369 A offenbart eine Vorrichtung zur Herstellung von laminierten Bauplatten mit Oberflächenplatten und Abstandselementen, die zwischen den Platten verklebt sind, umfassend Mittel zum Bewegen der Oberflächenplatten, Mittel zum Aufbringen einer Beschichtung aus einem schäumbaren, anhaftenden Zellkunststoff auf Oberseiten der Oberflächenplatten, Mittel zum Bereitstellen von Abstandselementen und Mittel zum schwenkbaren Anheben der Oberflächenplatten um benachbarten Kanten der Oberflächenplatten.

DE 11 47 029 B offenbart ein Verfahren zur Herstellung von Kunststoff-Verbundkörpern, die aus Deckschichten und Schaumstoffkernen bestehen, bei dem in einem Raum zwischen zwei Stützformen ein Schaumstoffkern erzeugt wird, wobei mindestens eine Form mit einer nach dem Vakuumziehverfahren geformten und gegebenenfalls mit Klebern und Verstärkungsschichten versehenen Kunststofffolie, die als Deckschicht für den Verbundkörper dienen soll, ausgekleidet ist.

JP H06 278224 A offenbart ein Verfahren zum Herstellen eines Kunststoffbehälters, wobei ein erstes blattartiges geschmolzenes Harz, das aus einem Extruder extrudiert wird, unter Druck durch eine erste hintere Oberflächenform und eine erste obere Oberflächenform in eine vorbestimmte Form geformt wird, und ein zweites blattartiges geschmolzenes Harze, das aus dem Extruder extrudiert wird, unter Druck durch eine zweite hintere Oberflächenform und eine zweite obere Oberflächenform in eine vorbestimmte Form geformt wird.

Vor diesem Hintergrund betrifft die Erfindung eine Fertigungsanlage mit den Merkmalen des Anspruchs 1 und ein Verfahren gemäß dem Anspruch 15. Weitere bevorzugte Ausführungsbeispiele sind in den abhängigen Ansprüchen definiert.

Ein Aspekt der Erfindung betrifft eine Fertigungsanlage zum Fertigen einer Tür eines Haushaltskältegeräts. Die Fertigungsanlage ist somit eine Tür-Fertigungsanlage zum Fertigen einer Haushaltskältegerättür. Die Fertigungsanlage ist insbesondere auch eine Schäumanlage, in welcher thermisches Isolationsmaterial in eine Fertigungsform, in welcher eine Vorderseite und eine Rückseite der Tür eingebracht sind, in einen Zwischenraum zwischen der Vorderseite und der Rückseite der Tür eingebracht werden kann.

Die Fertigungsanlage weist zumindest eine Fertigungsform zum Aufnehmen einer Vorderseite und einer Rückseite der Tür auf. Die Fertigungsform ist bestimmungsgemäß dazu vorgesehen, dass die Vorderseite und die Rückseite als bereits vorgefertigte Komponenten in die Fertigungsform eingebracht beziehungsweise eingelegt werden. Die Fertigungsform weist einen ersten Formträger auf. Der erste Formträger ist bestimmungsgemäß zum Aufnehmen einer vorgefertigten Vorderseite der Tür ausgebildet. Die Fertigungsform weist darüber hinaus einen zum ersten Formträger separaten zweiten Formträger auf. Dieser zweite Formträger ist bestimmungsgemäß zum Aufnehmen einer vorgefertigten Rückseite der Tür ausgebildet. Darüber hinaus weist die Fertigungsform eine Gelenkvorrichtung auf. Mit dieser Gelenkvorrichtung sind die beiden Formträger direkt verbunden, insbesondere schwenkbar miteinander verbunden. Durch diese Ausgestaltung kann die Fertigungsform geöffnet und geschlossen werden. Im geschlossenen Zustand liegen die Formträger aufeinander. Im geöffneten Zustand sind die Formträger so positioniert, dass die Bestückungsbereiche, in welche einerseits die Vorderseite und andererseits die Rückseite der Tür eingebracht werden können, frei zugänglich sind. Die Formträger sind insbesondere Formhälften der Fertigungsform.

Die Fertigungsform weist eine horizontal orientierte Längsachse auf. Im geöffneten Zustand der Fertigungsform und in Richtung dieser horizontalen Längsachse betrachtet ist der erste Formträger in Reihe zu dem zweiten Formträger angeordnet. Die Gelenkvorrichtung ist in Richtung dieser horizontalen Längsachse betrachtet zwischen diesen beiden Formträgern angeordnet. Die Anordnung der Gelenkvorrichtung ist so, dass eine senkrecht zu der Horizontalen orientierte Schwenkachse der Gelenkvorrichtung gebildet ist. Durch eine derartige Fertigungsanlage werden vielfältige Vorteile erreicht. Einerseits sind die beiden Formträger im geöffneten Zustand quasi auf gleicher Höhenlage zueinander angeordnet. Damit können sie gleichzeitig nebeneinander so positioniert werden, dass sie auch gleichzeitig bestückt werden können. Darüber hinaus ist diese Position in horizontaler Richtung, in der sie in Reihe zueinander angeordnet, sind dahingehend vorteilhaft, dass ein Werker nicht mehr über Kopf arbeiten muss. Beide Formträger sind gleichzeitig so positioniert beziehungsweise positionierbar, dass sie ohne über Kopf arbeiten von einem Werker oder einem Roboter bestückt werden können. Durch diese Anordnung und Ausgestaltung der Fertigungsform ist es darüber hinaus vorteilhaft auch erreicht, dass ein Taktzeitverlust, wie er im Stand der Technik entsprechend zu Fig. 3 erläutert wurde, entfällt. Denn es ist nicht mehr erforderlich, dass ein unterer Formträger, den es bei dieser erfindungsgemäßen Fertigungsanlage und der entsprechenden Fertigungsform nicht mehr gibt, zunächst erst separat nach unten geschwenkt werden muss, um verbesserten Zugang zu einem in Höhenrichtung darüber angeordneten Formträger zu erreichen. Da dieses Prinzip eines unteren und eines oberen Formträgers in der Fertigungsform durch die erfindungsgemäße Fertigungsanlage aufgelöst ist, können die zu Fig. 1 bis Fig. 3 erläuterten Nachteile vollständig behoben werden.

Es ist durch dieses Konzept auch ermöglicht, dass im geöffneten Zustand der Fertigungsform die beiden Formträger in einer Ebene zueinander und in horizontaler Richtung nebeneinander angeordnet sein können. Damit sind die oben genannten Vorteile begünstigt. Insbesondere ist somit eine besonders einfache Bestückung möglich. Die gleichzeitige Bestückung ist dadurch besonders einfach ermöglicht.

Darüber hinaus ist durch diese Orientierung auch ein einfaches Schließen der Fertigungsform ermöglicht. Die entsprechend orientierte Schwenkachse ermöglicht dabei vielfältige Vorrichtungen, um ein schnelles und genaues Schließen der Fertigungsform herbeizuführen.

In einem Ausführungsbeispiel in Höhenrichtung der Fertigungsanlage betrachtet sind der erste Formträger und der zweite Formträger im geöffneten Zustand der Fertigungsform auf gleicher Höhenlage zueinander angeordnet.

In einem Ausführungsbeispiel ist ein Formträger dann, wenn die Fertigungsform geöffnet ist und eine Bestückungsposition der Fertigungsform in der Fertigungsanlage erreicht ist, schräg orientiert. Dies bedeutet, dass der Formträger dem Roboter oder dem Werker zugewandt schräg gestellt ist. Insbesondere ist somit ein dem Roboter oder dem Werker näher gelegenes Ende dieses Formträgers in Höhenrichtung betrachtet weiter unten, als ein dem Roboter oder dem Werker fernliegenderes Ende des Formträgers.

Bei der Nutzung eines Roboters ist das Schrägstellen nicht erforderlich. Es kann jedoch auch dann durchgeführt werden.

Insbesondere ist in einem Ausführungsbeispiel vorgesehen, dass im geöffneten Zustand der Fertigungsform in einer erreichten Bestückungsposition der Fertigungsform entlang der Fertigungsanlage beide Formträger gleichzeitig die entsprechende gleiche schräg gestellte Position aufweisen. Die oben genannten Vorteile bezüglich der schnellen und gleichzeitigen sowie ergonomisch einfachen Bestückung sind dadurch nochmals verbessert.

In einem Ausführungsbeispiel weist die Gelenkvorrichtung in Richtung der Schwenkachse betrachtet ein oberes Gelenk und ein unteres Gelenk auf. Diese beiden Gelenke sind an einander zugewandten Ecken der Formträger angeordnet. Insbesondere sind dies Ecken von einander zugewandten kurzen Seiten der Formträger.

Beide Formträger sind erfindungsgemäß in ihrer jeweiligen Bestückungsseite im Wesentlichen rechteckig ausgebildet sein, beziehungsweise als Körper als Quader gebildet sein. Die in dem Zusammenhang kurzen Seiten dieser Rechtecke sind erfindungsgemäß parallel zur Schwenkachse orientiert. Sie sind entlang dieser horizontalen Längsachse betrachtet nacheinander angeordnet und in dem Zusammenhang einander zugewandt angeordnet. Die längeren Seiten dieser rechteckigen Formträger sind in Richtung der horizontalen Längsachse orientiert und somit parallel dazu orientiert. Die längeren Seiten dieses Formträgers sind somit in Reihe zueinander, entlang dieser horizontalen Längsachse betrachtet, angeordnet.

Damit ist auch eine diesbezüglich spezifizierte Geometrie eines Formträgers bezüglich seiner Lage im Raum charakterisiert. Insbesondere sind beide Formträger entsprechend angeordnet.

In einem Ausführungsbeispiel weist die Fertigungsanlage eine Fördereinrichtung auf. Die beiden Formträger sind im geöffneten Zustand der Fertigungsform in einer gemeinsamen Ebene nebeneinanderliegend auf dieser Fördereinrichtung angeordnet. Die Fördereinrichtung kann ein entsprechendes Gestell aufweisen. Beispielsweise kann dieses Gestell auch eine Schwenkvorrichtung aufweisen, die eine horizontale Schwenkachse darstellt. Diese Schwenkachse kann parallel zur horizontalen Längsachse orientiert sein. Durch diese Schwenkachse kann die Fördereinrichtung geneigt werden, sodass die bereits oben angesprochene, vorteilhafte Schrägstellung der beiden Formträger in der Bestückungsposition der Fertigungsform eingestellt werden kann. Diese Schwenkachse der Fördereinrichtung ist insbesondere senkrecht zur Schwenkachse der Gelenkvorrichtung orientiert.

In einem Ausführungsbeispiel weist die Fördereinrichtung einen Auflagetisch auf.

Auf diesem Auflagetisch sind die Formträger angeordnet, wenn die Fertigungsform geöffnet ist und die Bestückungsposition der Fertigungsform entlang der Fertigungsanlage erreicht ist. Der Auflagetisch ist in einem Ausführungsbeispiel in einem Winkel zwischen 20° und 70°, insbesondere zwischen 30° und 60° im Vergleich zur Horizontalebene schräg gestellt. Insbesondere gilt dies dann, wenn die Fertigungsform die Bestückungsposition entlang des Fertigungswegs in der Fertigungsanlage erreicht hat.

Diese Schrägstellung ist insbesondere diejenige, die bereits oben erläutert wurde, und die einem davorstehenden Werker oder einem Roboter zugewandt geneigt ist.

In einem Ausführungsbeispiel weist die Fördereinrichtung eine Fördereinheit auf. Mit der Fördereinheit sind die Formträger auf einem Auflagetisch der Fördereinrichtung weiterbewegbar. Einerseits kann somit die Fertigungsform mit der Fördereinheit in die Bestückungsposition entlang des Fertigungswegs in der Fertigungsanlage verfahren beziehungsweise dort hingebracht werden. Andererseits kann die Fertigungsform dann, wenn sie aus dieser Bestückungsposition wieder weitergefahren werden soll entsprechend weiterbewegt werden.

Insbesondere ist nicht nur mit dieser Ausgestaltung ein hoher Automatisierungsgrad ermöglicht. Gerade der genannte Aspekt bezüglich der erfindungsgemäßen Fertigungsanlage mit der spezifischen Anordnung und Orientierung der Fertigungsform im geöffneten Zustand ermöglicht einen hohen Automatisierungsgrad. Dies dahingehend, wie bereits oben erläutert, dass die Zugänglichkeit zu den einzelnen Formträgern einfach ermöglicht ist, gleichzeitig beide Formträger zugänglich und bestückbar sind und somit auch insbesondere die Bestückung mit einem Roboter, zumindest eines Formträgers, verbessert erfolgen kann.

In einem Ausführungsbeispiel weist die Fördereinheit eine Zahnstange auf. Diese Zahnstange ist zum kämmenden Koppeln und Entkoppeln mit einem weiteren Zahnungselement der Fördereinrichtung ausgebildet. Im kämmenden Zustand zwischen der Zahnstange und dem Zahnungselement ist eine Relativbewegung zwischen der Zahnstange und dem Zahnelement durch einen Motor der Fördereinrichtung bewirkbar. Dadurch kann die Bewegung von zumindest einem Formträger, insbesondere beider Formträger um eine definierte horizontale Strecke, in Richtung der genannten horizontalen Längsachse, auf dem Auflagetisch besonders genau erreicht werden. Diese Bewegung ist dann schlupffrei. Die diesbezügliche Verschiebung kann somit insbesondere auch sehr schnell und ohne Schlupf oder dergleichen erfolgen. Damit kann die Verbringung der Fertigungsform in diese Bestückungsposition entlang des Fertigungswegs in der Fertigungsanlage schnell und positionsexakt ermöglicht werden. Insbesondere im Vergleich zu einem Ausführungsbeispiel, bei welchem eine derartige Zahnungsvorrichtung nicht vorhanden ist, können somit derartige Positionstoleranzen der Form, die durch ein unerwünschtes Weiterrollen oder Weitergleiten von entsprechenden Roll- oder Gleitvorrichtungen auftreten könnten, vermieden werden.

Die erforderlichen Positionstoleranzen können auch bei Varianten ohne Zahnstangen-System erreicht werden, wenn die Beschleunigungskräfte unterhalb der vorherrschenden Reibkräfte an Rollen beziehungsweise den Transportrollen einer Rolleneinrichtung liegen.

In einem Ausführungsbeispiel weist die Fördereinheit eine Rolleneinrichtung auf, auf welcher die zumindest eine Fertigungsform aufliegt. Eine Weiterbewegung dieser Fertigungsform auf dem Auflagetisch durch Entlangrollen ist daher einfach durchführbar. So kann beispielsweise dann, wenn die Fertigungsform geschlossen ist, und insbesondere auch das thermische Isolationsmaterial bereits eingebracht ist, diese insbesondere geschlossene Fertigungsform einfach aus der Bestückungsposition herausgefahren werden und dies diesbezüglich durch die Rolleneinrichtung ermöglicht werden. Durch diesen weiteren Fertigungsweg ist es daher nicht erforderlich, eine Zahnvorrichtung vorzusehen, wie es oben vorteilhaft erläutert wurde. Somit ist es einerseits vorteilhaft, dass zum Erreichen der Bestückungsposition dieser Fertigungsform die Bewegung zumindest anhand der angesprochenen Zahnungsvorrichtung erfolgt. Dem Fertigungsprozessschritt nachfolgend kann dann ein Fortbewegen auf Basis einer derartigen Zahnungsvorrichtung entbehrlich sein. Es kann dann gegebenenfalls die genannte Rolleneinrichtung genügen.

In einem Ausführungsbeispiel weist die Fertigungsanlage eine Schwenkvorrichtung auf. Durch diese Schwenkvorrichtung ist bestimmungsgemäß ein Schließen der Fertigungsform durchführbar. Ausgehend von dem geöffneten Zustand der Fertigungsform und einem diesbezüglich in horizontaler Richtung nebeneinanderliegen der beiden Formträger kann dann durch diese Schwenkvorrichtung gezielt das Schließen bewirkt werden. Insbesondere wird durch diese Schwenkvorrichtung ein Formträger um die oben genannte Schwenkachse der Gelenkvorrichtung auf den anderen Formträger aufgeschwenkt. Eine derartige Schwenkvorrichtung kann vielfältig ausgebildet sein. Sie kann Hubvorrichtungen hydraulischer oder pneumatischer oder elektromotorischer Funktionsweise aufweisen. Es sind jedoch auch andere Schwenkvorrichtungen möglich.

Beispielsweise können in dem Zusammenhang Arme vorgesehen sein, die mit einer Umlenkrolle kombiniert sind, sodass beim Entlangführen der geöffneten Fertigungsform auf dem Fertigungsweg in der Fertigungsanlage diese geöffnete Fertigungsform diese Arme erreicht, mit diesen koppelt und insbesondere aufgrund der vorhandenen Umlenkrolle beziehungsweise Laufrolle dann automatisch der Schließvorgang der Formträger um die Schwenkachse der Gelenkvorrichtung bewirkt wird.

In einem weiteren Ausführungsbeispiel weist zumindest ein Formträger eine parallel zur Schwenkachse der Gelenkvorrichtung gemessene Breite auf, die zwischen 750 mm und 1050 mm, insbesondere zwischen 800 mm und 1000 mm, beträgt. Durch diese Ausgestaltung ist es möglich, auch sehr große Türen für sehr große Haushaltskältegeräte einfach und in der Fertigungszeit reduziert herzustellen.

In einem Ausführungsbeispiel weist ein Formträger eine parallel zur horizontalen Längsachse bemessene Länge auf, die insbesondere zwischen 1200 mm und 2500 mm aufweist. Auch diesbezüglich gelten die Vorteile, wie sie oben bezüglich der Breite genannt wurden.

In einem weiteren Ausführungsbeispiel weist die Fertigungsanlage eine Schäumeinheit auf. Diese ist bestimmungsgemäß dazu vorgesehen, thermisches Isolationsmaterial, insbesondere thermischen Isolationsschaum, in die Fertigungsform einzubringen. Insbesondere wird dabei dieser thermisch isolierende Schaum in die in den Formträger eingelegte Vorderseite der Tür und/oder in die in den Formträger eingelegte Rückseite der Tür eingespritzt. Dieser Zwischenraum bildet sich dann, wenn die Vorderseite und die Rückseite in die Formträger eingelegt sind und die Fertigungsform geschlossen ist.

Damit kann auch in einfacher und vorteilhafter Weise das Schäumen in einer derartigen Fertigungsanlage erfolgen.

In einem Ausführungsbeispiel ist die Fertigungsanlage als Umlaufanlage ausgebildet. Bei dieser Umlaufanlage ist die Fördereinrichtung ein Linearsystem mit einer Förderstrecke. Auf dieser Förderstrecke sind mehrere Fertigungsformen gleichzeitig aufgelegt und in Richtung dieser horizontalen Längsachse sind die Formträger dieser Fertigungsformen zueinander angeordnet und umlaufend förderbar. Eine derartige Umlaufanlage ist keine Trommelanlage. Bei einer Umlaufanlage folgt somit kein Rotieren einer Fertigungsform als Ganzes betrachtet um eine Rotationsachse einer Trommel. Denn eine derartige Trommel ist bei einer Umlaufanlage nicht vorhanden. Vielmehr werden die Fertigungsformen auf dem Fertigungsweg, auf welchem auch das Bestücken der Fertigungsform mit der Vorderseite und der Rückseite der Tür und dem Schließen der Fertigungsform erfolgt, nur in dieser linearen Richtung entlang des Umlaufwegs der Umlaufanlage bewegt.

In einem Ausführungsbeispiel sind die Formträger der Fertigungsform im geöffneten Zustand der Fertigungsform so in linearer Richtung nebeneinander angeordnet, dass sie gleichzeitig einerseits mit der Vorderseite und andererseits mit der Rückseite bestückbar sind. Auch dadurch ist ein hoher Automatisierungsgrad der Fertigungsanlage ermöglicht. Beispielsweise kann die diesbezügliche Bestückung mit einem Werker oder zwei Werkern erfolgen. Ebenso kann eine Bestückung einerseits mit einem Werker, andererseits mit einem Roboter erfolgen. Möglich ist es auch, dass beide Bestückungen jeweils mit einem Roboter oder zwei verschiedenen Robotern durchgeführt wird. Damit ist bei der vorgeschlagenen Fertigungsanlage auch die Variabilität im Hinblick auf die Belegung der Anlage mit Werkern und/oder Robotern sehr flexibel und variabel.

Derartiges ist bei der aus dem Stand der Technik bekannten Anlage, wie sie zu Fig. 1 bis Fig. 3 erläutert wurde, nicht möglich.

Ein weiterer Aspekt der Erfindung betrifft ein Verfahren zum Herstellen einer Tür für ein Haushaltskältegerät. Die Herstellung erfolgt dabei erfindungsgemäß mit einer Fertigungsanlage gemäß dem oben genannten Aspekt oder einem vorteilhaften Ausführungsbeispiel davon.

Bei dem Verfahren werden folgende Schritte durchgeführt:
- Bereitstellen einer geöffneten Fertigungsform auf einer Fördereinrichtung der Fertigungsanlage, so dass die Formträger in Richtung ihrer Längsachsen in Reihe zueinander angeordnet werden;
- Bestücken des ersten Formträgers mit der Vorderseite der Tür;
- Bestücken des zweiten Formträgers mit der Rückseite der Tür, wobei die Position der Formträger bei diesem Bestücken mit der Vorderseite und der Rückseite zueinander unverändert bleibt;
- Befüllen der eingelegten Vorderseite und/oder der eingelegten Rückseite mit Isolationsschaum; und
- Schließen der Fertigungsform, indem ein Formträger um die Schwenkachse der Gelenkvorrichtung auf den anderen Formträger aufgeschwenkt wird.

Insbesondere bleiben die Positionen der Formträger relativ zueinander während des gesamten Bestückungsvorgangs (Bestücken mit der Vorderseite und mit der Rückseite) unverändert. Es werden also die Vorderseite und die Rückseite in die Formträger jeweils entsprechend eingelegt. Ist dies erfolgt, wird thermisches Isolationsmaterial, insbesondere in Form eines Isolationsschaums in zumindest einen der beiden Formträger eingebracht. Im weiteren Verlauf wird die Fertigungsform geschlossen und dabei werden die beiden Formträger aufeinander geschwenkt. Die Fertigungsform bleibt solange im geschlossenen Zustand, bis die Aushärtezeit des Isolationsschaums abgelaufen ist.

Vorteilhafte Ausführungsbeispiele der genannten Fertigungsanlage sind als vorteilhafte Ausführungsbeispiele des Verfahrens anzusehen. Die gegenständlichen Komponenten der Fertigungsanlage alleine oder zumindest teilweise in Wirkverbindung ermöglichen dabei die Verfahrensschritte für das Verfahren.

Mit Angaben "oben", "unten", "vorne", "hinten, "horizontal", "vertikal", "Tiefenrichtung", "Breitenrichtung", "Höhenrichtung" etc. sind die bei bestimmungsgemäßen Gebrauch und bestimmungsgemäßen Anordnen der Anlage gegebenen Positionen und Orientierungen angegeben.

Ausführungsbeispiele der Erfindung werden nachfolgend anhand schematischer Zeichnungen näher erläutert. Es zeigen:
- Fig. 1: eine Seitenansicht einer Fertigungsform, wie sie aus dem Stand der Technik bekannt ist und bei einer Trommelanlage eingesetzt wird;
- Fig. 2: eine Darstellung gemäß Fig. 1 in einem zu Fig. 2 unterschiedlichen Fertigungszustand;
- Fig. 3: die Darstellung gemäß Fig. 1 und Fig. 2, bei welchen die aus dem Stand der Technik bekannte Fertigungsform mit einem Formträger verschwenkt wurde, um die Zugänglichkeit zu einem darüber liegenden Formträger der Fertigungsform für ein über Kopf arbeiten für einen Werker zu ermöglichen;
- Fig. 4: die schematische Darstellung eines Ausführungsbeispiels einer erfindungsgemäßen Fertigungsanlage;
- Fig. 5: die perspektivische Darstellung eines Teilbereichs der Fertigungsanlage gemäß Fig. 4 mit einer Fertigungsform, die in einer Bestückungsposition entlang des Fertigungswegs der Fertigungsanlage angeordnet ist und geöffnet ist;
- Fig. 6: eine Seitensicht der Darstellung gemäß Fig. 5; und
- Fig. 7: eine weitere perspektivische Darstellung eines Teilbereichs der Fertigungsanlage gemäß Fig. 4 mit einer geöffneten Fertigungsform.

In den Figuren werden gleiche oder funktionsgleiche Elemente mit den gleichen Bezugszeichen versehen.

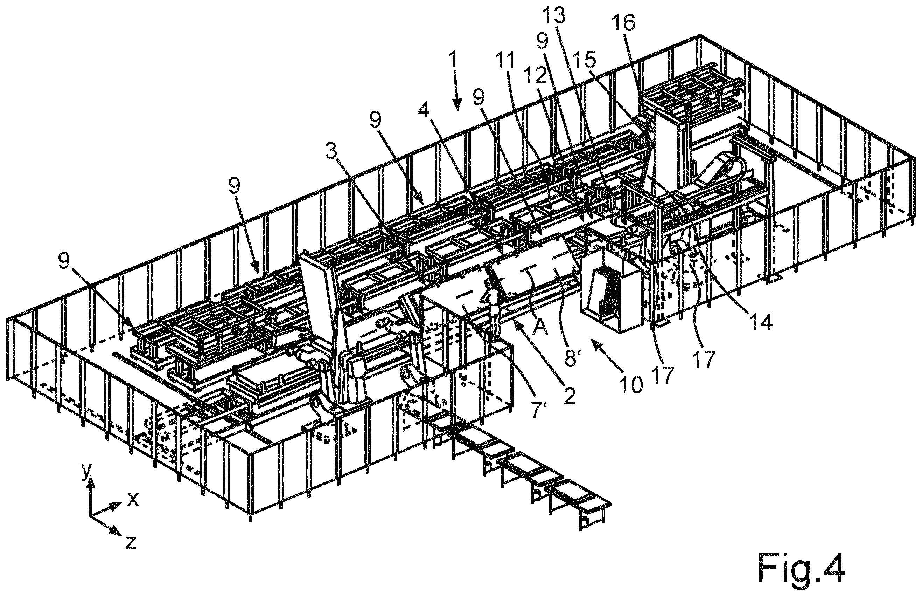

In der Fig. 4 ist ein Ausführungsbeispiel einer Fertigungsanlage 1 gezeigt. Die Fertigungsanlage 1 ist zum Fertigen einer Tür eines Haushaltskältegeräts bestimmungsgemäß vorgesehen und ausgebildet. Die Fertigungsanlage 1 ist des Weiteren dazu auch zum Schäumen einer Tür eines Haushaltskältegeräts ausgebildet. Die Fertigungsanlage 1 ist als Umlaufanlage ausgebildet. Dies bedeutet insbesondere auch, dass sie eine Förderstrecke beziehungsweise eine Umlaufbahn 9 aufweist, entlang welcher die Fertigungsstrecke gebildet ist. Entlang dieser Umlaufstrecke 9, welche eine Linearstrecke ist, sind im Ausführungsbeispiel mehrere separate Fertigungsformen 2 angeordnet. Sie werden in linearer Richtung entlang dieser Umlaufstrecke 9 bewegt und diesbezüglich zu den entsprechenden Fertigungsstationen beziehungsweise Fertigungsabschnitten transportiert beziehungsweise gefördert.

Die Fertigungsanlage 1 weist entlang dieser Umlaufstrecke 9 einen Bestückungsbereich 10 auf. Der Bestückungsbereich 10 ist somit ein Fertigungsbereich der Fertigungsanlage 1, an welchem die Fertigungsform 2 geöffnet ist und einerseits eine Vorderseite und andererseits eine Rückseite der zu fertigenden Tür in Formträger 3 und 4 der Fertigungsform 2 eingebracht beziehungsweise eingelegt werden können.

Die Fertigungsform 2 weist darüber hinaus eine Gelenkvorrichtung 5 auf. Mit der Gelenkvorrichtung 5 sind die beiden separaten Formträger 3 und 4 dieser Fertigungsform 2 gelenkig miteinander verbunden. Dieser Bestückungsbereich 10 ist in einem Ausführungsbeispiel durch zumindest eine Lichtschranke der Fertigungsanalage 1 gesichert. Dadurch kann der Zugang von beispielsweise einem Werker 6, wie er auch in den Fig. 1 bis 3 gezeigt ist, und/oder einem nicht gezeigten Roboter überwacht werden. Insbesondere kann somit eine Zone die in Tiefenrichtung (z-Richtung) bei der Betrachtung von Fig. 4 vor der Fertigungsform 2 ist, überwacht werden. Dies ist insbesondere deswegen vorteilhaft, um beim Schließen der Fertigungsform 2 und somit beim Zusammenklappen der Formträger 3 und 4 über die Gelenkvorrichtung 5 entsprechenden Freiraum vorzufinden. Beispielsweise kann in dem Zusammenhang auch eine Ampelstation realisiert sein, die dem Werker 6 und/oder dem Roboter optisch anzeigt, ob der Bestückungsbereich 10 wieder zugänglich ist.

Wie bereits in Fig. 4 zu erkennen ist, ist die Fertigungsform 2 in diesem geöffneten Zustand während des Fertigungsprozesses so gestaltet, dass die Formträger 3 und 4 in horizontaler Richtung in Reihe zueinander angeordnet sind. Dies bedeutet, dass entlang einer horizontalen Längsachse A der Fertigungsform 2 diese beiden Formträger 3 und 4 im geöffneten Zustand der Fertigungsform 2 in dieser horizontalen Reihe zueinander positioniert sind. In Richtung dieser Längsachse A betrachtet, die sich in horizontaler Richtung beziehungsweise in Breitenrichtung (x-Richtung) der Fertigungsanlage 1 in diesem Bestückungsbereich 10 befindet, ist die Gelenkvorrichtung 5 zwischen diesen beiden Formträger 3 und 4 angeordnet beziehungsweise ausgebildet. Die Gelenkvorrichtung 5 ist Bestandteil der Fertigungsform 2 und direkt mit den Formträgern 3 und 4 verbunden. Es ist in dem Zusammenhang eine Schwenkachse B dieser Gelenkvorrichtung 5 gebildet, die in diesem geöffneten Zustand der Fertigungsform 2 in dem Bestückungsbereich 10 der Fertigungsanlage 1 senkrecht zu dieser Längsachse A orientiert ist. Diese Schwenkachse B ist in einem Ausführungsbeispiel in einer Ebene, die durch die Tiefenrichtung (z-Richtung) und die Höhenrichtung (y-Richtung) der Fertigungsanlage 1 aufgespannt ist, orientiert. Sie ist darüber hinaus in einem Winkel, der insbesondere zwischen 20° und 70° orientiert ist, zu der Horizontalebene, die durch die z-Richtung und die x-Richtung aufgespannt wird, orientiert.

Insbesondere gelten diese Anordnungen und Orientierungen für die Position der Fertigungsform 2 zumindest in dem Bestückungsbereich 10 der Fertigungsanlage 1. Durch diese Vorgehensweise und Orientierung ist die in diesem Bestückungsbereich 10 bestimmungsgemäß vorgesehene Bestückung der Formträger 3 und 4 mit einerseits der Vorderseite 7' und andererseits der Rückseite 8' der Tür besonders einfach und vorteilhaft ermöglicht. Zugänglichkeit zu beiden Formträger 3 und 4 ist uneingeschränkt ermöglicht und auch gleichzeitig möglich. Ein über-Kopf-Arbeiten eines Werkers 6 oder eine über-Kopf-Bestückung mit einem Roboter ist nicht mehr erforderlich. Die Vorderseite 7' kann eine Außenwand aus Blech sein. Die Rückseite 8' kann eine Innenwand aus Kunststoff sein.

Darüber hinaus ist in Fig. 4 auch zu erkennen, dass die Fertigungsanlage 1 eine Fördereinrichtung 11 aufweist. Durch diese ist auch die Umlaufstrecke 9 definiert vorgegeben. Auf dieser Fördereinrichtung 11 sind die insbesondere mehreren separaten Fertigungsformen 2 angeordnet. Die Fördereinrichtung 11 weist einen Auflagetisch 12 auf, auf welchem die Fertigungsformen 2 direkt angeordnet sind. Insbesondere weist dieser Auflagetisch zumindest im Bestückungsbereich 10 eine Orientierung auf, die in einem Winkel zwischen 20° und 70°, insbesondere zwischen 30° und 60° im Vergleich zur Horizontalebene schräg gestellt ist. Diese Schrägstellung ist derart, dass die Fertigungsform 2 diesbezüglich mit ihren geöffneten Formträgern 3 und 4 dem Bestückungsbereich 10 zugewandt ist.

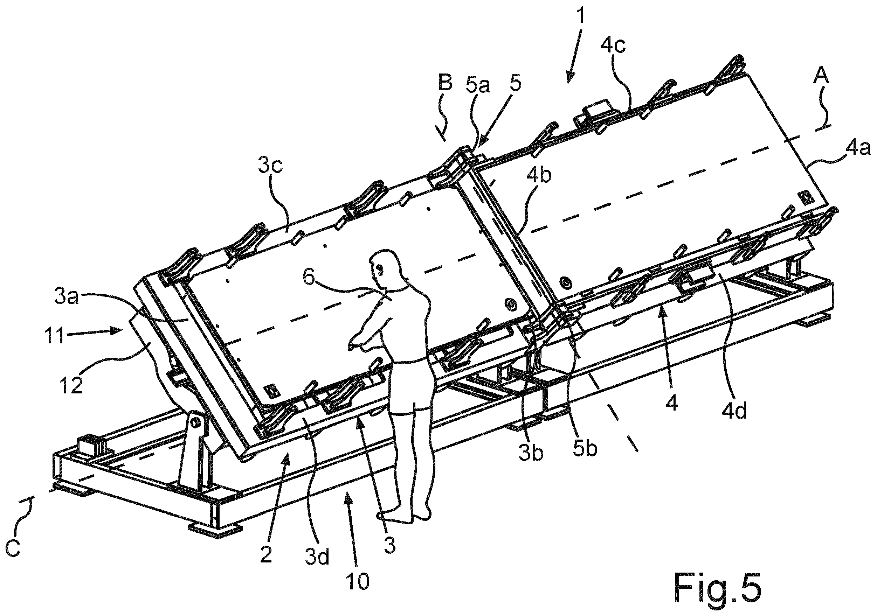

In Fig. 5 ist in einer perspektivischen Darstellung ein Teilausschnitt der Fertigungsanlage 1 gezeigt. Es ist hier ein Teilausschnitt des Bestückungsbereichs 10 gezeigt. Es ist zu erkennen, dass die Fertigungsform 2 im geöffneten Zustand dargestellt ist. Die Schrägstellung der Fertigungsform 2 zur Horizontalebene ist ebenfalls zu erkennen. Entlang der Umlaufstrecke 9, insbesondere im Bereich des Bestückungsbereichs 10, der Fertigungsanlage 1 betrachtet ist die Längsachse A in Richtung und somit parallel der Umlaufrichtung orientiert. Damit sind die Formträger 3 und 4 der geöffneten Fertigungsform 2 in dieser Zone des Koppelbereichs 10 auch entlang dieser Umlaufrichtung in Reihe zueinander angeordnet.

Die Formträger 3 und 4 sind in diesem Zustand so in linearer Richtung nebeneinander beziehungsweise in Reihe zueinander angeordnet, dass sie gleichzeitig mit der Vorderseite 7' der Tür und andererseits mit der Rückseite 8' bestückbar sind. Dies bedeutet auch, dass an beiden Formträger 3 und 4 gleichzeitig und nebeneinander gearbeitet werden kann. Die Bestückung der Formträger 3 und 4 kann somit gleichzeitig durch zwei verschiedene Werker 6 und/oder einerseits durch einen Werker 6 und andererseits durch einen Roboter oder durch zwei separate Roboter erfolgen. So ist es möglich, dass kein Werker 6 vorhanden ist und beispielsweise nur ein Roboter vorgesehen ist, der beide Formträger 3 und 4 bestückt.

Wie in Fig. 4 und Fig. 5 bereits angedeutet, wird die Fertigungsform 2 entlang der Umlaufstrecke 9 der Fertigungsanlage 1 in den Bestückungsbereich 10 verfahren. Die Fertigungsform 2 wird in dem geöffneten Zustand der Fördereinrichtung 11 bereitgestellt.

Dies erfolgt derart, wie es bereits zu Fig. 4 und Fig. 5 erläutert wurde. Es erfolgt dann ein Bestücken des ersten Formträgers 3 mit der Vorderseite 7' der Tür und ein Bestücken des zweiten Formträgers 4 mit der Rückseite 8' der Tür. Bei diesem gesamten Bestückungsvorgang bleibt die Position der Formträger 3 und 4 insbesondere zueinander unverändert.

Ist diese Bestückung abgeschlossen und auch Isolationsschaum in die Vorderseite 7' und/oder in die Rückseite 8' eingebracht, insbesondere mit einer Schäumeinheit 17, folgt in einem weiteren Schritt das Schließen dieser Fertigungsform 2. Dazu wird die Bewegung der Formträger 3 und 4 um die Schwenkachse B vollzogen, sodass der Formträger 3 und der Formträger 4 aufeinander zu geschwenkt werden, und dann im geschlossenen Zustand aufeinander liegen. Ein derartiges Verschwenken kann gemäß der Darstellung in Fig. 4 auch außerhalb des Bestückungsbereichs 10 erfolgen, beispielsweise in einem Schließbereich 13. Insbesondere erfolgt dieser Schließvorgang automatisch durch entsprechende Einrichtungen der Fertigungsanlage 1. Beispielsweise können Arme 14 und eine Laufrolle 15 beziehungsweise Umlenkrolle vorgesehen sein. Bei der Bewegung der Fertigungsform 2 entlang der Umlaufstrecke 9 und aus dem Bestückungsbereich 10 heraus in den Schließbereich 13 hinein erfolgt ein automatisches Kontaktieren der Arme 14. Durch das Bewegen um die Umlaufrolle 15 wird dann dieser Schließprozess automatisch vollzogen.

Möglich sind jedoch auch andere Schließvorrichtungen. Diese können beispielsweise mit Hubvorrichtungen, wie entsprechenden Hubzylindern oder dergleichen, realisiert werden. Auch diese Beispiele für den Schließvorgang sind nicht abschließend zu verstehen. Es können auch noch andere Vorrichtungen vorgesehen sein.

Wie in Fig. 5 zu erkennen ist, sind die beiden Formträger 3 und 4 in ihrer Flächengestaltung rechteckig. In dem Zusammenhang sind kurze Seitenlängen 3a und 3b senkrecht zur Längsachse A orientiert. Entsprechendes gilt für kurze Seitenlängen 4a und 4b des Formträgers 4. Die einander zugewandten kurzen Seitenlängen 3b und 4b sind direkt mit der Gelenkvorrichtung 5 verbunden. Dazu sind in Richtung der Schwenkachse betrachtet ein oberes Gelenk 5a und ein unteres Gelenk 5b vorgesehen. Diese sind in dem Zusammenhang an den Eckbereichen dieser kurzen Seitenlängen 4b und 3b ausgebildet. Lange Seitenlängen 3c und 3d sind parallel zur Längsachse A orientiert. Selbiges gilt für die langen Seitenlängen 4c und 4d des zweiten Formträgers 4.

Darüber hinaus ist in Fig. 5 auch zu erkennen, dass in diesem geöffneten Zustand der Fertigungsform 2, insbesondere wenn sie sich im Bestückungsbereich 10 der Fertigungsanlage 1 befindet, die Formträger 3 und 4 in einer gemeinsamen Ebene angeordnet sind. Darüber hinaus sind die langen Seitenlängen 3c und 4c im Wesentlichen in einer Linie zueinander angeordnet. Dies gilt entsprechend für die langen Seitenlängen 3d und 4d. In diesem geöffneten Zustand der Fertigungsform 2 sind die Formträger 3 und 4 gemäß der Darstellung in Fig. 5 auch ohne Versatz in Höhenrichtung und/oder ohne Versatz in Tiefenrichtung.

Es kann vorgesehen sein, dass die Formträger 3 und/oder 4 bezüglich ihrer kurzen Seitenlängen 3a, 3b, 4a und 4b ein Ausmaß beziehungsweise eine Breite zwischen 750 mm und 1050 mm, insbesondere zwischen 800 mm und 1000 mm, aufweisen. In einem Ausführungsbeispiel weist zumindest ein Formträger 3 und/oder 4 die parallel zur Längsachse A ein Ausmaß der langen Seitenlänge 3c und/oder 4c und/oder 3b und/oder 4b zwischen 1200 mm und 2500 mm auf.

Wie in Fig. 5 auch zu erkennen ist, sind die langen Seitenlängen 3c, 3d, 4c, 4d im geöffneten Zustand der Fertigungsform 2 und wenn diese in diesem Bestückungsbereich 10 der Fertigungsanlage 1 ist, parallel zu der Längsachse A orientiert, insbesondere auch parallel zur Umlaufbahn 9 orientiert.

Wie bereits zu Fig. 4 erläutert, erfolgt nach dem Bestücken und Einbringen des Isolationsschaums das Schließen durch ein Verschwenken der Formträger 3 und 4 um die Gelenkvorrichtung 5.

Diese Ausgestaltung ist somit mit einer Schwenkvorrichtung 16 der Fertigungsanlage 1 im Schwenkbereich realisiert.

Nachfolgend auf das Einlegen der Vorderseite 7' und der Rückseite 8' in die Formträger 3 und 4 der Fertigungsform 2 erfolgt ein Befüllen eines gebildeten Zwischenraums zwischen der Vorderseite 7' und der Rückseite 8' der Tür in der Fertigungsform 2 mit einem thermischen Isolationsmaterial, insbesondere einem Isolationsschaum. Dazu weist die Fertigungsanlage 1 insbesondere eine lediglich mit einem Bezugszeichen angedeutete und bereits oben erwähnte Schäumeinheit 17 auf. Im noch offenen Zustand der Fertigungsform 2 wird dieser Isolationsschaum eingebracht, insbesondere eingespritzt. Es erfolgt dann gleich das Schließen. Der geschlossene Zustand bleibt so lange bestehen, bis der Isolationsschaum ausgehärtet ist.

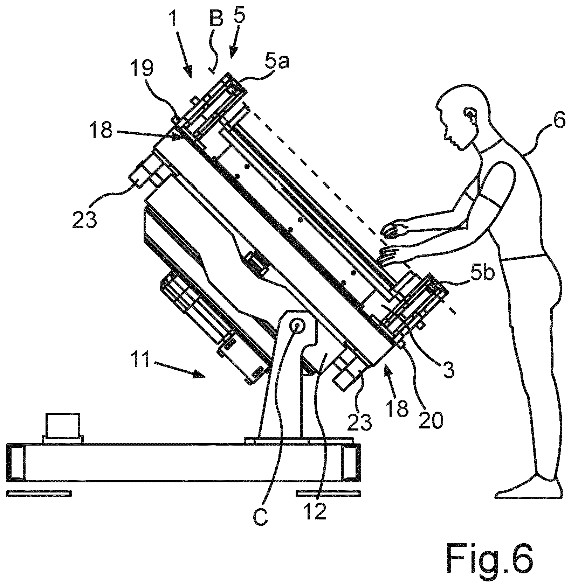

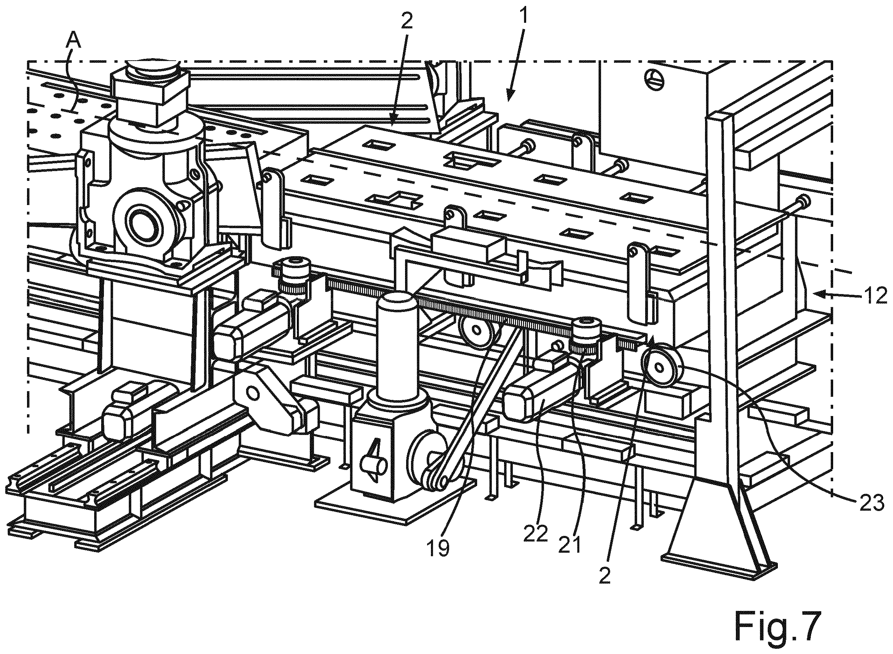

In einem Ausführungsbeispiel ist vorgesehen, dass die Fertigungsanlage 1 eine Fördereinheit 18 aufweist. Die Fördereinheit 18 ist Bestandteil der Fördereinrichtung 11. Die Fördereinheit 18 kann in einem Ausführungsbeispiel eine Zahnstange 19 und/oder eine Zahnstange 20 aufweisen. Darüber hinaus weist die Fördereinheit 18 ein in Fig. 6 nicht zu erkennendes, jedoch in Fig. 7 gezeigtes Zahnungselement 21 auf. Dieses kämmt mit der Zahnstange 19. Mit einem Motor 22 der Fertigungsanlage 1 wird das Zahnungselement 21 angetrieben und die Fertigungsform 2 auf dem Auflagetisch 12 positionsgenau und schnell verfahren.

Darüber hinaus kann vorgesehen sein, dass die Fördereinheit 18 eine Rolleneinrichtung 23, wie dies ebenfalls in Fig. 6 und Fig. 7 zu erkennen ist, aufweist. Mit der Rolleneinrichtung 23 wird das Verfahren der Fertigungsform 2 entlang der Fertigungsstrecke und somit auch der Umlaufstrecke 9 unterstützt. Insbesondere in den Bereichen, in denen das Verfahren einer Fertigungsform 2 nicht über die Zahnungsvorrichtung mit der Zahnstange 19 und/oder 20 und einem jeweils damit zahnenden Zahnungselement 21 erfolgt, wird die Fortbewegung insbesondere nur durch die Rolleneinrichtung 23 realisiert.

In Fig. 6 ist, wie dies bereits oben dargelegt wurde, die Seitenansicht der Ausgestaltung in Fig. 5 gezeigt. Die Schrägstellung der geöffneten Fertigungsform 2 in diesem Bestückungsbereich 10 ist zu erkennen. Insbesondere kann dazu der Auflagetisch 12 durch eine entsprechende Schwenkvorrichtung der Fertigungsanlage 1 in diese Position verschwenkt werden.

In Fig. 7 ist in einer perspektivischen Darstellung ein Teilausschnitt der Fertigungsanlage 1 gezeigt. Insbesondere kann in dem Zusammenhang eine Verschwenkung des Auflagetisches 12 um eine Achse C, wie dies in Fig. 6 gezeigt ist, erfolgen. Diese Achse C ist in Fig. 6 senkrecht zur Figurenebene orientiert.

### Bezugszeichenliste

| | | | |
|---|---|---|---|
| 1 | Fertigungsanlage | 16 | Schwenkvorrichtung |
| 2' | Fertigungsform | 17 | Schäumeinheit |
| 3' | Formträger | 18 | Fördereinheit |
| 3 | Formträger | 19 | Zahnstange |
| 3a | Seitenlängen | 20 | Zahnstange |
| 3b | Seitenlängen | 21 | Zahnungselement |
| 4' | Formträger | 22 | Motor |
| 4 | Formträger | 23 | Rolleneinrichtung |
| 4a | Seitenlängen | A | Längsachse |
| 4b | Seitenlängen | B | Schwenkachse |
| 5' | Gelenkvorrichtung | | |
| 5 | Gelenkvorrichtung | | |
| 5a | Gelenk | | |
| 5b | Gelenk | | |
| 6 | Werker | | |
| 7' | Rückseite | | |
| 8' | Vorderseite | | |
| 9 | Umlaufstrecke | | |
| 10 | Bestückungsbereich | | |
| 11 | Fördereinrichtung | | |
| 12 | Auflagetisch | | |
| 13 | Schließbereich | | |
| 14 | Arme | | |
| 15 | Umlaufrolle | | |

## Patentansprüche

1. Fertigungsanlage (1) zum Fertigen einer Tür eines Haushaltskältegeräts, mit einer Fertigungsform (2'), die einen ersten in einer Bestückungsseite im Wesentlichen rechteckig ausgebildeten Formträger (3') zum Aufnehmen einer Vorderseite (7') der Tür und einen zum ersten Formträger (3') separaten zweiten in einer Bestückungsseite im Wesentlichen rechteckig ausgebildeten Formträger (4') zum Aufnehmen einer Rückseite (8') der Tür aufweist, und mit einer Gelenkvorrichtung (5') mit welcher die beiden Formträger (3', 4') schwenkbar miteinander verbunden sind, wobei **die Ferti**gungsform (2) eine horizontal orientierte Längsachse (A) aufweist und im geöffneten Zustand der Fertigungsform (2) in Richtung dieser horizontalen Längsachse (A) betrachtet der erste Formträger (3) in Reihe zu dem zweiten Formträger (4) angeordnet ist und die Gelenkvorrichtung (5) in Richtung dieser horizontalen Längsachse (A) zwischen den beiden Formträgern (3, 4) angeordnet ist, so dass eine senkrecht zu der horizontalen Längsachse (A) orientierte Schwenkachse (B) der Gelenkvorrichtung (5) gebildet ist, wobei kurze Seiten der rechteckig ausgebildeten Formträger (3',4') parallel zur Schwenkachse (B) orientiert sind.

2. Fertigungsanlage (1) nach Anspruch 1, **dadurch gekennzeichnet, dass** die Gelenkvorrichtung (5) in Richtung der Schwenkachse (B) betrachtet ein oberes Gelenk (5a) und ein unteres Gelenk (5b) aufweist, die an einander zugewandten Ecken kurzer Seitenlängen (3b, 4b) der Formträger (3, 4) angeordnet sind.

3. Fertigungsanlage (1) nach Anspruch 1 oder 2, **dadurch gekennzeichnet, dass** die Formträger (3, 4) im geöffneten Zustand der Fertigungsform (2) in Höhenrichtung (y) und in Tiefenrichtung (z) der Fertigungsanlage (1) auf gleicher Lage angeordnet sind.

4. Fertigungsanlage (1) nach einem der vorhergehenden Ansprüche, **dadurch gekennzeichnet, dass** die Fertigungsanlage (1) eine Fördereinrichtung (11) aufweist, auf welcher die beiden Formträger (3, 4) im geöffneten Zustand der Fertigungsform (2) in einer gemeinsamen Ebene nebeneinander liegend angeordnet sind.

5. Fertigungsanlage (1) nach Anspruch 4, **dadurch gekennzeichnet, dass** die Fördereinrichtung (11) einen Auflagetisch (12) aufweist, auf welchem die Formträger (3, 4) angeordnet sind, wobei der Auflagetisch (12) in einem Winkel zwischen 20° und 70°, insbesondere zwischen 30° und 60°, im Vergleich zur Horizontalebene schräg gestellt ist.

6. Fertigungsanlage (1) nach Anspruch 4 oder 5, **dadurch gekennzeichnet, dass** die Fördereinrichtung (12) eine Fördereinheit (18) aufweist, mit welcher die Formträger (3, 4) auf einem Auflagetisch (12) der Fördereinrichtung (11) weiter bewegt werden.

7. Fertigungsanlage (1) nach Anspruch 6, **dadurch gekennzeichnet, dass** die Fördereinheit (18) zumindest eine Zahnstange (19, 20) aufweist, die zum kämmenden Koppeln und Entkoppeln mit zumindest einem weiteren Zahnungselement (21) der Fördereinrichtung (11) ausgebildet ist, wobei im kämmenden Zustand eine Relativbewegung zwischen der Zahnstange (19, 20) und dem Zahnungselement (21) durch zumindest einen Motor (22) der Fördereinrichtung (11) bewirkbar ist, so dass die Formträger (3, 4) um eine definierte Strecke auf dem Auflagetisch (12), insbesondere schlupffrei, verschiebbar sind.

8. Fertigungsanlage (1) nach Anspruch 6 oder 7, **dadurch gekennzeichnet, dass** die Fördereinheit (18) eine Rolleneinrichtung (23) aufweist, auf welcher die Formträger (3, 4) aufliegen, so dass eine Weiterbewegung auf dem Auflagetisch (12) durch Entlangrollen durchführbar ist.

9. Fertigungsanlage (1) nach einem der vorhergehenden Ansprüche, **dadurch gekennzeichnet, dass** die Fertigungsanlage (1) eine Schwenkvorrichtung (16) aufweist, mit welcher zum Schließen der Fertigungsform (2) ein Formträger (3, 4) um die Schwenkachse (B) auf den anderen Formträger (3, 4) aufgeschwenkt wird.

10. Fertigungsanlage (1) nach einem der vorhergehenden Ansprüche, **dadurch gekennzeichnet, dass** zumindest ein Formträger (3, 4) eine parallel zur Schwenkachse (B) bemessene Breite zwischen 750mm und 1050mm, insbesondere zwischen 800mm und 1000mm, aufweist.

11. Fertigungsanlage (1) nach einem der vorhergehenden Ansprüche, **dadurch gekennzeichnet, dass** zumindest ein Formträger (3, 4) eine parallel zur Längsachse (A) bemessene Länge zwischen 1200mm und 2500mm aufweist.

12. Fertigungsanlage (1) nach einem der vorhergehenden Ansprüche, **dadurch gekennzeichnet, dass** die Fertigungsanlage (1) eine Schäumeinheit (17) aufweist, mit welcher Isolationsschaum in die Fertigungsform (2) einbringbar ist.

13. Fertigungsanlage (1) nach einem der vorhergehenden Ansprüche, **dadurch gekennzeichnet, dass** sie eine Umlaufanlage ist, bei welcher die Fördereinrichtung (11) ein Linearsystem mit einer Förderstrecke (9) ist, auf welcher mehrere Fertigungsformen (2) gleichzeitig aufgelegt sind und in Richtung der Längsachsen (A) der Formträger (3, 4) umlaufend förderbar sind.

14. Fertigungsanlage (1) nach einem der vorhergehenden Ansprüche, **dadurch gekennzeichnet, dass** die Formträger (3, 4) im geöffneten Zustand der Fertigungsform (2) so in linearer Richtung nebeneinander angeordnet sind, dass sie gleichzeitig einerseits mit der Vorderseite (7') und andererseits mit der Rückseite (8') bestückbar sind.

15. Verfahren zum Herstellen einer Tür für ein Haushaltskältegerät mit einer Fertigungsanlage (1) nach einem der vorhergehenden Ansprüche, bei welchem folgende Schritte durchgeführt werden:
- Bereitstellen einer geöffneten Fertigungsform (2) auf einer Fördereinrichtung (11) der Fertigungsanlage (1), so dass die Formträger (3, 4) in Richtung ihrer Längsachsen (A) in Reihe zueinander angeordnet werden;
- Bestücken des ersten Formträgers (3) mit der Vorderseite (7') der Tür;
- Bestücken des zweiten Formträgers (4) mit der Rückseite(8') der Tür, wobei die Position der Formträger (3, 4) bei diesem Bestücken mit der Vorderseite (7') und der Rückseite (8') zueinander unverändert bleibt;
- Befüllen der eingelegten Vorderseite (7') und/oder der eingelegten Rückseite (8') mit Isolationsschaum; und
- Schließen der Fertigungsform (2), indem ein Formträger (3, 4) um die Schwenkachse (B) der Gelenkvorrichtung (5) auf den anderen Formträger (3, 4) aufgeschwenkt wird.

## Claims

1. Manufacturing installation (1) for manufacturing a door of a household refrigeration appliance, with a manufacturing mould (2'), which has a first mould support (3') designed as essentially rectangular in a loading side, for receiving a front side (7') of the door, and a second mould support (4') separate from the first mould support (3') designed as essentially rectangular in a loading side, for receiving a rear side (8') of the door, and with an articulation apparatus (5') with which both of the mould supports (3', 4') are pivotably connected with one another, wherein
the manufacturing mould (2) has a longitudinal axis (A) oriented horizontally and when the manufacturing mould (2) is in the open state, when viewed in the direction of the horizontal longitudinal axis (A), the first mould support (3) is arranged in series with the second mould support (4) and the articulation apparatus (5) is arranged between the two mould supports (3, 4) in the direction of this horizontal longitudinal axis (A), so that a pivot axis (B) of the articulation apparatus (5) is formed which is oriented perpendicular to the horizontal longitudinal axis (A), wherein short sides of the mould supports (3', 4') designed to be rectangular are oriented parallel to the pivot axis (B).

2. Manufacturing installation (1) according to claim 1, **characterised in that** the articulation apparatus (5), when viewed in the direction of the pivot axis (B), has an upper joint (5a) and a lower joint (5b), which are arranged on corners of short side lengths (3b, 4b) of the mould supports (3, 4) which face one another.

3. Manufacturing installation (1) according to claim 1 or 2, **characterised in that**, when the manufacturing mould (2) is in the open state, the mould supports (3, 4) are arranged in the same position in the height direction (y) and in the depth direction (z) of the manufacturing installation (1).

4. Manufacturing installation (1) according to one of the preceding claims, **characterised in that** the manufacturing installation (1) has a conveying facility (11), on which the two mould supports (3, 4) are arranged lying next to one another on a shared plane when the manufacturing mould (2) is in the open state.

5. Manufacturing installation (1) according to claim 4, **characterised in that** the conveying facility (11) has a support table (12), on which the mould supports (3, 4) are arranged, wherein the support table (12) is set obliquely at an angle of between 20° and 70°, in particular between 30° and 60°, compared to the horizontal plane.

6. Manufacturing installation (1) according to claim 4 or 5, **characterised in that** the conveying facility (12) has a conveying unit (18), with which the mould supports (3, 4) can be further moved on a support table (12) of the conveying facility (11).

7. Manufacturing installation (1) according to claim 6, **characterised in that** the conveying unit (18) has at least one toothed rack (19, 20) which is designed for engagement coupling and decoupling with at least one further toothed element (21) of the conveying facility (11), wherein, in the engaged state, a relative movement between the toothed rack (19, 20) and the toothed element (21) can be effected by way of at least one motor (22) of the conveying facility (11), so that the mould supports (3, 4) can be moved on the support table (12) about a defined path, in particular, without slipping.

8. Manufacturing installation (1) according to claim 6 or 7, **characterised in that** the conveying unit (18) has a roller facility (23), on which the mould supports (3, 4) lie, so that an additional movement on the support table (12) can be performed by way of rolling.

9. Manufacturing installation (1) according to one of the preceding claims, **characterised in that** the manufacturing installation (1) has a pivot apparatus (16), with which one mould support (3, 4) is pivoted about the pivot axis (B) onto the other mould support (3, 4) so as to close the manufacturing mould (2).

10. Manufacturing installation (1) according to one of the preceding claims, **characterised in that** at least one mould support (3, 4) has a width measured parallel to the pivot axis (b) of between 750 mm and 1050 mm, in particular between 800 mm and 1000 mm.

11. Manufacturing installation (1) according to one of the preceding claims, **characterised in that** at least one mould support (3, 4) has a length measured parallel to the longitudinal axis (A) of between 1200 mm and 2500 mm.

12. Manufacturing installation (1) according to one of the preceding claims, **characterised in that** the manufacturing installation (1) has a foaming unit (17), with which insulating foam can be introduced into the manufacturing mould (2).

13. Manufacturing installation (1) according to one of the preceding claims, **characterised in that** it is a circulation installation, in which the conveying facility (11) is a linear system with a conveying path (9), on which a plurality of manufacturing moulds (2) are simultaneously placed and which can be conveyed in a circulating manner in the direction of the longitudinal axes (A) of the mould supports (3, 4).

14. Manufacturing installation (1) according to one of the preceding claims, **characterised in that** the mould supports (3, 4) are arranged next to one another in the linear direction when the manufacturing mould (2) is in the open state such that one side can be loaded with the front side (7') and the other side can be loaded with the rear side (8') at the same time.

15. Method for manufacturing a door for a household refrigeration appliance with a manufacturing installation (1) according to one of the preceding claims, in which the following steps are performed:
- providing an open manufacturing mould (2) on a conveying facility (11) of the manufacturing installation (1), such that the mould supports (3, 4) are arranged in series with one another in the direction of their longitudinal axes (A);
- loading the first mould support (3) with the front side (7') of the door;
- loading the second mould support (4) with the rear side (8') of the door, wherein the position of the mould supports (3, 4) relative to one another remains unchanged following this loading with the front side (7') and the rear side (8');
- filling the inserted front side (7') and/or the inserted rear side (8') with insulating foam; and
- closing the manufacturing mould (2) in that one mould support (3, 4) is pivoted about the pivot axis (B) of the articulation apparatus (5) onto the other mould support (3, 4).

## Revendications

1. Installation de fabrication (1) pour la fabrication d'une porte d'un appareil frigorifique ménager, avec un moule de fabrication (2') qui présente un premier support de moule (3') formé de façon essentiellement rectangulaire dans une face d'équipement pour la réception d'une face avant (7') de la porte et un deuxième support de moule (4') séparé du premier support de moule (3'), formé de façon essentiellement rectangulaire dans une face d'équipement pour la réception d'une face arrière (8') de la porte, et avec un dispositif d'articulation (5') avec lequel les deux supports de moule (3', 4') sont reliés de façon pivotante l'un à l'autre, dans laquelle le moule de fabrication (2) présente un axe longitudinal (A) orienté horizontalement et, à l'état ouvert du moule de fabrication (2), vu en direction de cet axe longitudinal horizontal (A), le premier support de moule (3) est disposé en série par rapport au deuxième support de moule (4) et le dispositif d'articulation (5) est disposé dans la direction de cet axe longitudinal horizontal (A) entre les deux supports de moule (3, 4), de sorte qu'un axe de pivotement (B) du dispositif d'articulation (5) orienté perpendiculairement à l'axe longitudinal horizontal (A) est formé, dans laquelle les côtés courts des supports de moule formés de façon rectangulaire (3', 4') sont orientés parallèlement à l'axe de pivotement (B).

2. Installation de fabrication (1) selon la revendication 1, **caractérisée en ce que** vu dans la direction de l'axe de pivotement (B), le dispositif d'articulation (5) présente une articulation supérieure (5a) et une articulation inférieure (5b) disposées en des angles dirigés l'un vers l'autre des longueurs de côté courtes (3b, 4b) des supports de moule (3, 4).

3. Installation de fabrication (1) selon la revendication 1 ou 2, **caractérisée en ce qu'**à l'état ouvert du moule de fabrication (2), les supports de moule (3, 4) sont disposés dans la même position dans le sens de la hauteur (y) et dans le sens de la profondeur (z) de l'installation de fabrication (1).

4. Installation de fabrication (1) selon l'une des revendications précédentes, **caractérisée en ce que** l'installation de fabrication (1) présente un dispositif de convoyage (11) sur lequel les deux supports de moule (3, 4) sont disposés l'un à côté de l'autre dans un plan commun, à l'état ouvert du moule de fabrication (2).

5. Installation de fabrication (1) selon la revendication 4, **caractérisée en ce que** le dispositif de convoyage (11) présente une table de support (12) sur laquelle les supports de moule (3, 4) sont disposés, dans laquelle la table de support (12) est inclinée selon un angle compris entre 20° et 70°, en particulier entre 30° et 60°, par rapport au plan horizontal.

6. Installation de fabrication (1) selon la revendication 4 ou 5, **caractérisée en ce que** le dispositif de convoyage (12) présente une unité de convoyage (18) avec laquelle les supports de moule (3, 4) sont déplacés sur une table de support (12) du dispositif de convoyage (11).

7. Installation de fabrication (1) selon la revendication 6, **caractérisée en ce que** l'unité de convoyage (18) présente au moins une crémaillère (19, 20) qui est formée pour s'engrener et se désengrener avec au moins un élément denté supplémentaire (21) du dispositif de convoyage (11), dans laquelle dans l'état engrené, un mouvement relatif entre la crémaillère (19, 20) et l'élément denté (21) peut être provoqué par au moins un moteur (22) du dispositif de convoyage (11), de sorte que les supports de moule (3, 4) sont déplaçables sur une distance définie sur la table de support (12), en particulier sans glissement.

8. Installation de fabrication (1) selon la revendication 6 ou 7, **caractérisée en ce que** l'unité de convoyage (18) présente un dispositif à rouleaux (23) sur lequel les supports de moule (3, 4) reposent, de sorte qu'un déplacement sur la table de support (12) peut s'effectuer par roulement.

9. Installation de fabrication (1) selon l'une des revendications précédentes, **caractérisée en ce que** l'installation de fabrication (1) présente un dispositif de pivotement (16) permettant, pour la fermeture du moule de fabrication (2), de faire pivoter un support de moule (3, 4) autour de l'axe de pivotement (B) sur l'autre support de moule (3, 4).

10. Installation de fabrication (1) selon l'une des revendications précédentes, **caractérisée en ce qu'**au moins un support de moule (3, 4) présente une largeur mesurée parallèlement à l'axe de pivotement (B) comprise entre 750 mm et 1050 mm, en particulier entre 800 mm et 1000 mm.

11. Installation de fabrication (1) selon l'une des revendications précédentes, **caractérisée en ce qu'**au moins un support de moule (3, 4) présente une largeur mesurée parallèlement à l'axe longitudinal (A) comprise entre 1200 mm et 2500 mm.

12. Installation de fabrication (1) selon l'une des revendications précédentes, **caractérisée en ce que** l'installation de fabrication (1) présente une unité de moussage (17) permettant d'introduire de la mousse isolante dans le moule de fabrication (2).

13. Installation de fabrication (1) selon l'une des revendications précédentes, **caractérisée en ce qu'**elle est un carrousel dans lequel le dispositif de convoyage (11) est un système linéaire avec une ligne de convoyage (9) sur laquelle plusieurs moules de fabrication (2) sont placés simultanément et peuvent être convoyés en carrousel dans la direction des axes longitudinaux (A) des supports de moule (3, 4).

14. Installation de fabrication (1) selon l'une des revendications précédentes, **caractérisée en ce que** les supports de moule (3, 4) sont, à l'état ouvert du moule de fabrication (2), disposés les uns à côté des autres dans le sens linéaire de sorte à pouvoir être équipés simultanément, d'une part, de la face avant (7') et, d'autre part, de la face arrière (8').

15. Procédé de fabrication d'une porte pour un appareil frigorifique ménager avec une installation de fabrication (1) selon l'une des revendications précédentes, dans lequel les étapes suivantes sont réalisées :
- mise à disposition d'un moule de fabrication ouvert (2) sur un dispositif de convoyage (11) de l'installation de fabrication (1), de sorte que les supports de moule (3, 4) sont disposés en série les uns par rapport aux autres dans le sens de leurs axes longitudinaux (A) ;
- équipement du premier support de moule (3) avec la face avant (7') de la porte ;
- équipement du deuxième support de moule (4) avec la face arrière (8') de la porte, la position des supports de moule (3, 4) demeurant inchangée entre la face avant (7') et la face arrière (8') lors de cet équipement ;
- remplissage de la face avant insérée (7') et/ou de la face arrière insérée (8') avec de la mousse isolante ; et
- fermeture du moule de fabrication (2) en pivotant un support de moule (3, 4) autour de l'axe de pivotement (B) du dispositif d'articulation (5) sur l'autre support de moule (3, 4).
